# FASCICULE DE BREVET EUROPEEN

(11) **EP 3 014 283 B1**
(45) Date de publication et mention de la délivrance du brevet: **26.07.2017**
(21) Numéro de dépôt: 14714283.0
(22) Date de dépôt: 01.04.2014
(51) Int. Cl.: G01N 35/10, B01L 3/02, G01F 1/34

(54) **METHODE DE CONTROLE D'OPERATIONS DE PIPETAGE**
KONTROLLMETHODE FÜR PIPETTIERVORGÄNGE
METHOD OF CONTROLLING PIPETTING OPERATIONS

(30) Priorité: 24.06.2013 EP 13173422
(43) Date de publication de la demande: 04.05.2016
(73) Titulaire: Seyonic SA, 2000 Neuchâtel (CH)
(72) Inventeur: VAN DER SCHOOT, Bart, CH-2000 Neuchâtel (CH); LUCHESSA, Yari, CH-1307 Lussery-Villars (CH); BOILLAT, Marc, CH-2012 Auvernier (CH)
(74) Mandataire: Gevers SA
(86) Numéro de dépôt international: PCT/EP2014/056551
(87) Numéro de publication internationale: WO 2014/206588

(56) Documents cités:
- EP-A1- 2 031 403
- WO-A1-01/88549
- US-A1- 2004 089 051
- US-B1- 7 792 647
- US-B2- 7 640 787
- LEE D ET AL: "Development of the pipetting error sensor", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 119, no. 1, 24 novembre 2006 (2006-11-24), pages 150-158, XP027971629, ISSN: 0925-4005 [extrait le 2006-11-24]
- LIGUO CHEN ET AL: "Intelligent control of Piezoelectric Micropump based on MEMS flow sensor", INTELLIGENT ROBOTS AND SYSTEMS (IROS), 2010 IEEE/RSJ INTERNATIONAL CONFERENCE ON, IEEE, PISCATAWAY, NJ, USA, 18 octobre 2010 (2010-10-18), pages 3055-3060, XP031920207, DOI: 10.1109/IROS.2010.5649844 ISBN: 978-1-4244-6674-0

## Description

### Domaine technique

La présente invention se rapporte au domaine des opérations de pipetage et de micro-pipetage. Elle concerne, plus particulièrement, une méthode de contrôle permettant de détecter des erreurs susceptibles de se produire lors d'opérations réalisées au moyen d'un dispositif de pipetage.

### Etat de la technique

Des opérations de pipetage sont souvent réalisées dans des procédures d'analyse, au cours desquelles des réactifs liquides doivent être dosés avec une grande précision. De petites quantités de liquide sont aspirées à partir d'un réservoir et dispensées dans un réacteur tel qu'un puits d'une microplaque de titration. Ces opérations de pipetage font partie des opérations de routine dans bien des domaines, notamment dans le médical, la chimie ou la pharmacie ... et sont souvent intégrées dans des procédures automatiques.

Naturellement, il est très important de mesurer précisément le volume de liquide aspiré et dispensé, mais cela n'est pas suffisant. En effet, il est toujours possible de rencontrer des problèmes au cours d'une opération de pipetage. Par exemple, le réservoir peut être vide ou l'embout de la pipette (également souvent appelé cône, pointe ou tip) peut ne pas être entré dans le liquide lorsque l'aspiration commence et, de fait, la pipette peut aspirer de l'air. La pipette peut également sortir du liquide avant la fin de l'opération d'aspiration et aspirer de l'air après avoir aspiré du liquide. Par ailleurs, l'embout de la pipette peut également être bouché.

Aussi, vu la grande précision requise dans la mesure de la quantité de liquide aspirée et dispensée, mais aussi vu les applications visées, tout problème survenant au cours d'une opération de pipetage doit être détecté et signalé de sorte qu'aucune fausse mesure ne vienne perturber une analyse ou un dosage.

Le brevet US 7, 640, 787 divulgue une méthode de contrôle d'opérations de pipetage selon le préambule de la revendication 1. Le brevet US 6, 938, 504 divulgue une méthode pour évaluer la manière dont se déroule une opération de dosage. Il est proposé d'obtenir une courbe caractéristique en fonction du temps, d'au moins une variable d'état d'une substance présente dans la pipette. Cette courbe caractéristique est obtenue pour toute la durée de l'opération de dosage. On analyse ensuite si cette courbe caractéristique est contenue, pour toute sa durée, dans une gamme de tolérance appliquée à une courbe de référence préétablie. Sur la base de cette analyse, un résultat positif ou négatif quant à la réalisation de l'opération est ensuite transmis.

Cette dernière méthode est intéressante, mais elle présente plusieurs inconvénients. Notamment, il est nécessaire d'obtenir et d'avoir en mémoire une ou plusieurs courbes de référence (une pour chaque condition expérimentale comme le volume pipeté, la vitesse d'aspiration ou de dispense, le type de liquide ou la géométrie du tip). Il est clair que la calibration du système pour la détection d'erreurs de pipetage est très laborieuse.

Le brevet WO0188549 dévoile une méthode pour contrôler le bon déroulement d'une opération de pipetage grâce à l'analyse de la pression atmosphérique mesurée dans un tube d'aspiration du dispositif. Un générateur de vide est relié par un tube d'aspiration à une pipette destinée à aspirer et à dispenser des échantillons liquides. Selon la dépression produite par le générateur de vide, le liquide est aspiré dans la pipette ou dispensé hors de la pipette. Un capteur de pression atmosphérique est disposé sur le tube d'aspiration reliant le générateur de vide et la pipette. L'analyse de la pression mesurée sur un cycle de pipetage permet de vérifier la qualité de l'opération et de détecter des anomalies de fonctionnement.

Cette méthode présente l'inconvénient de n'apporter qu'une information qualitative sur l'opération de pipetage. La mesure de la pression de l'air au niveau du tube d'aspiration ne permet pas de connaitre le débit du liquide circulant dans la pipette ni de calculer les volumes aspiré et dispensé au cours de l'opération de pipetage.

La présente invention a pour but de proposer une méthode permettant d'éviter les inconvénients susmentionnés.

### Divulgation de l'invention

Plus particulièrement, l'invention concerne une méthode de contrôle d'opérations de pipetage réalisées par un dispositif de pipetage comprenant :
- une pointe d'aspiration et de dispense destinée à être plongée dans un réservoir de liquide pour prélever une certaine quantité de ce liquide,
- une entrée destinée à être connectée à une source de pression ou de vide,
- un système capable de mesurer une valeur représentant le débit du liquide aspiré ou dispensé pendant l'opération de pipetage,
- un circuit électronique commandant l'opération de pipetage et apte à communiquer des informations à un ordinateur distant.

La méthode selon l'invention est basée sur la détection de changements de débit corrélés à des erreurs survenant au cours d'opérations de pipetage, en aspiration ou en dispense, telles que des passages d'air à du liquide ou du liquide à de l'air, indépendamment des volumes et débits utilisés. La méthode comprend les étapes suivantes :
- obtenir une courbe représentant le débit en fonction du temps du liquide aspiré ou dispensé par la pipette,
- calculer la première dérivée de ladite courbe,
- identifier et enregistrer les valeurs maximale et minimale de ladite première dérivée et les moments auxquels les valeurs maximales et minimales se produisent,
- comparer les valeurs maximales et minimales et les moments auxquels les valeurs maximales et minimales se produisent avec des références prédéterminées pour lesdites valeurs et pour les moments auxquels elles se produisent,
- selon le résultat de la comparaison, fournir un message de validation ou d'erreur.

### Brève description des dessins

D'autres détails de l'invention apparaîtront plus clairement à la lecture de la description qui suit, faite en regard des figures annexes, dans lesquelles :
- la figure 1 est une vue schématique d'un dispositif de pipetage convenant à la mise en oeuvre de l'invention,
- les figures 2, 3, 4 et 5 proposent des courbes obtenues par la méthode selon l'invention, respectivement pour une opération normale et pour différentes situations anormales d'aspiration,
- les figures 6 à 10 proposent des courbes obtenues par la méthode selon l'invention, respectivement pour une opération normale et pour différentes situations anormales de dispense, et
- la figure 11 représente des courbes obtenues lors d'une détection d'une occlusion.

### Description détaillée

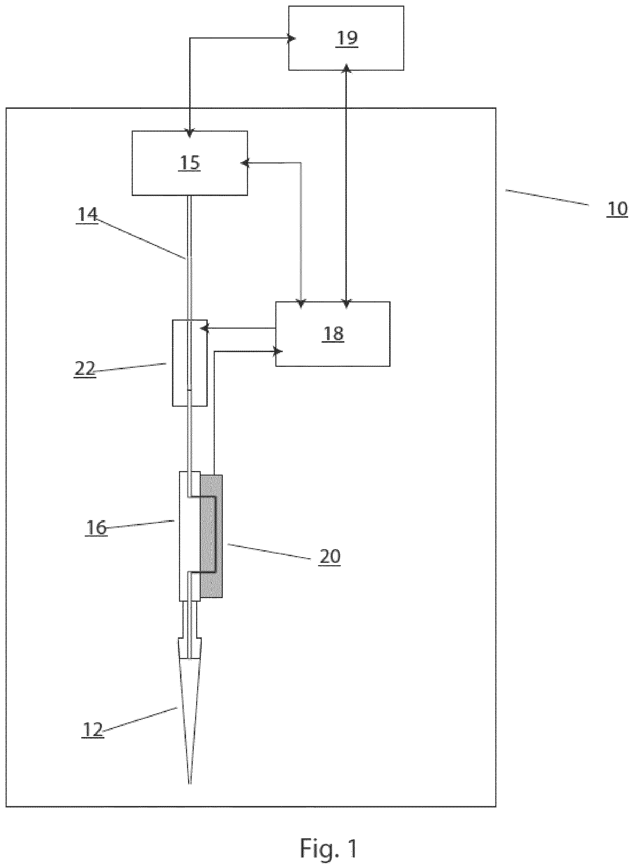

La méthode selon l'invention est avantageusement adaptée pour être utilisée avec un dispositif de pipetage 10, dont un exemple est illustré sur la figure 1. Un tel dispositif de pipetage 10 comprend une pointe d'aspiration et de dispense 12 destinée à être plongée dans un réservoir de liquide pour prélever une certaine quantité de ce liquide. La pointe d'aspiration et de dispense peut être une canule fixe ou un embout amovible. Le dispositif 10 comprend également une entrée 14 destinée à être connectée à une source de pression ou de vide 15, un système 16 capable de mesurer une valeur représentant le débit du liquide aspiré ou dispensé pendant l'opération de pipetage et un circuit électronique 18 commandant l'opération de pipetage et apte à communiquer des informations à un ordinateur distant 19.

Le dispositif de pipetage peut également comprendre une vanne 22, par exemple de type solénoïde, pour ouvrir ou fermer la connexion entre l'entrée 14 et le système 16.

La source de pression ou de vide 15 pourrait également être connectée à un réservoir de fluide transporteur non représenté, les déplacements de ce fluide entraînant l'aspiration ou la dispense du liquide à pipeter. On pourra se référer au brevet EP1327152 incorporé par référence, pour obtenir une description complète d'un dispositif de pipetage mettant en oeuvre un dispositif de pipetage avec un fluide transporteur. On notera que ce fluide transporteur peut être liquide ou gazeux.

Avantageusement, le système 16 comprend un capteur de débit 20, du type mesurant d'une part une différence de pression du fluide transporteur traversant un rétrécissement fluidique et, d'autre part, une température du fluide au travers dudit rétrécissement. On pourra se référer au brevet EP1364188, incorporé par référence, pour obtenir une description détaillée de ce type de capteur.

Pour réaliser une opération de pipetage, telle que l'aspiration d'un échantillon dans la pointe d'aspiration et de dispense 12, l'ordinateur distant 19 règle d'abord le niveau de vide ou de surpression approprié que la source 15 doit appliquer et envoie ensuite la séquence d'instructions suivante au dispositif de pipetage (avec un ou plusieurs canaux) :
- définir le mode de pipetage : aspiration ou dispense d'un échantillon,
- définir le volume à aspirer ou dispenser en fonction du volume défini par l'utilisateur,
- envoyer une commande ou un signal de déclenchement pour initier l'opération.

Une fois que la commande ou le signal de déclenchement a été reçu, le dispositif de pipetage commence, tout d'abord, par calculer la consigne pour le volume à prélever, en fonction des informations reçues. Des paramètres de calibration du capteur et d'autres paramètres internes ou externes peuvent également être pris en compte pour calculer cette consigne. Ensuite, le dispositif de pipetage débute l'opération de pipetage en ouvrant la vanne 22 et, simultanément, il commence l'acquisition en continu ou à intervalles réguliers, du débit fourni par le système 16 décrit ci-dessus.

En intégrant sur le temps, les valeurs de débit acquises, le circuit électronique 18 détermine le volume aspiré ou dispensé. Tant que le volume de liquide à prélever n'a pas été atteint, le dispositif de pipetage continue l'acquisition du débit qui est stocké, au moins de manière séquentielle, dans une mémoire locale, afin de pouvoir obtenir une courbe représentative du débit en fonction du temps, pour le liquide aspiré ou dispensé.

Après l'opération de pipetage et selon l'invention, la courbe représentant le débit en fonction du temps, enregistrée au cours de l'opération est analysée de manière à détecter une éventuelle erreur de pipetage.

L'algorithme utilisé pour analyser la courbe de débit immédiatement après l'opération de pipetage comporte les étapes suivantes. On calcule la première dérivée de la courbe de débit. Puis, sur cette première dérivée, on détecte les valeurs maximale et minimale, ainsi que le moment auquel ces valeurs ont été atteintes sur l'ensemble des données acquises pendant la mesure. Seulement ces valeurs maximale et minimale et le moment auquel ces valeurs ont été atteintes, sont stockés dans une mémoire du circuit électronique 18. La dérivée en tant que telle n'est pas stockée.

Pour une détermination plus efficace des erreurs, les valeurs maximale et minimale de la première dérivée de la courbe de débit sont normalisées, avantageusement en fonction du débit, afin de rendre la détection d'erreur indépendante de ce paramètre.

En utilisant les informations enregistrées, c'est-à-dire les valeurs maximale, minimale et le moment auquel ces valeurs sont atteintes, on peut diagnostiquer un certain nombre d'erreurs d'aspiration :
- une erreur de repérage (« tracking error ») si une opération d'aspiration débute dans le liquide mais se termine dans l'air,
- une aspiration d'air seulement, si le réservoir est vide,
- un échantillon trop petit (« short sample ») si une opération d'aspiration débute dans l'air mais se termine dans le liquide.

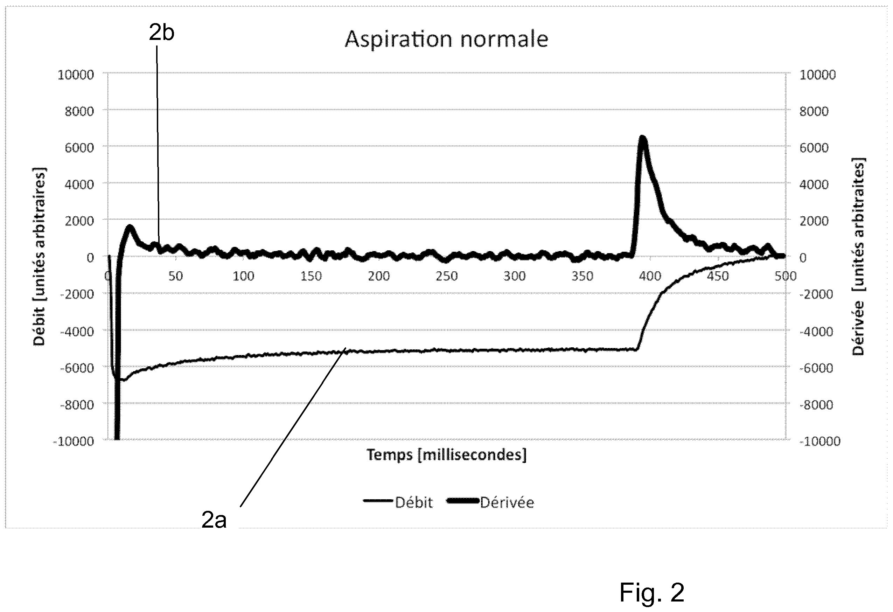

A titre de comparaison, on peut se référer aux courbes montrées sur la figure 2, qui montrent une aspiration normale. La courbe 2a représente le débit du liquide aspiré, la courbe 2b représente la première dérivée du débit selon une unité arbitraire. On analyse la courbe 2b et on peut remarquer une valeur minimale au début de l'aspiration due à l'ouverture de la vanne. Ce premier minimum est toujours présent et n'a pas d'incidence ni de signification particulière pour la détection d'une erreur. L'algorithme ne commencera l'analyse qu'après le passage de ce premier minimum et, dans les exemples ci-après, on fera abstraction de ce minimum initial.

Par la suite, on peut observer une valeur maximale qui se produit dans un intervalle de 40ms, de préférence de 30ms après le début de l'opération de pipetage. Cette durée est typiquement la durée nécessaire pour atteindre, dans des conditions normales de fonctionnement du dispositif de pipetage, un régime d'écoulement stationnaire du liquide dans la pipette. On englobe dans la notion d'écoulement stationnaire, les régimes d'écoulement quasi-stationnaire.

On pourra remarquer que, pour une aspiration normale, on ne détecte pas de valeur minimale après le minimum initial précité, étant entendu qu'une valeur minimale doit être identifiée comme inférieure à un seuil prédéfini. On remarquera également que, lorsque la consigne du volume de liquide à prélever a été atteinte, la vanne est fermée et le débit revient à zéro progressivement.

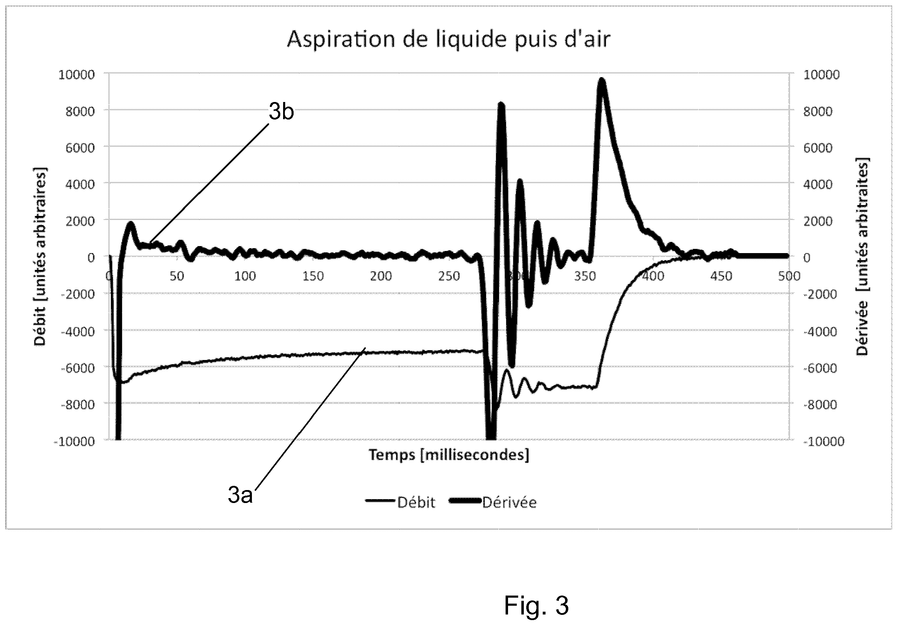

Sur la figure 3, la courbe 3a représente le débit du liquide aspiré et la courbe 3b représente la première dérivée du débit. On analyse la courbe 3b et on remarque une valeur minimale, inférieure au seuil prédéterminé susmentionné. Au cours d'une opération d'aspiration, une telle valeur minimale révèle un passage liquide-air de la pointe de dispense et d'aspiration 12. Si on détecte la présence d'une telle valeur minimale au cours de l'opération, avant que le volume requis ait été aspiré, et si cette valeur minimale est inférieure audit seuil prédéterminé, un message d'erreur est délivré signifiant que, au cours de l'opération d'aspiration, le dispositif de pipetage a aspiré du liquide puis de l'air.

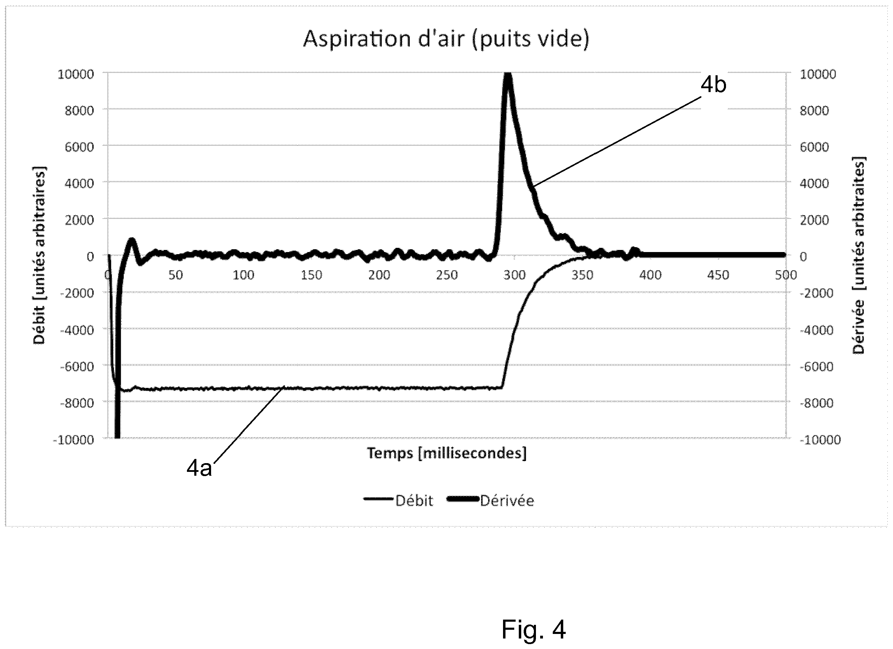

Sur la figure 4, la courbe 4a représente le débit du liquide aspiré et la courbe 4b représente la première dérivée du débit et on analyse la courbe 4b. Bien qu'un pic présentant une valeur maximale, soit détecté autour de 30ms après le début de l'opération, ce pic est plus petit que ce que l'on peut observer sur la figure 2. Ainsi, si la valeur maximale pendant l'aspiration ne dépasse pas le seuil prédéterminé, un message d'erreur est fourni signifiant que, au cours de l'opération de pipetage, le dispositif a aspiré de l'air uniquement. Cela signifie que le puits dans lequel la pipette effectue son aspiration, est vide ou est à un niveau inférieur par rapport au niveau d'aspiration de la pipette. Le cas échéant, cette analyse peut être confirmée en détectant l'absence d'une valeur minimale inférieure à un seuil prédéterminé (typiquement, celui de l'analyse de la figure 3). Cette absence signifie qu'il n'y a pas eu de transition liquide-air, avant l'aspiration d'air.

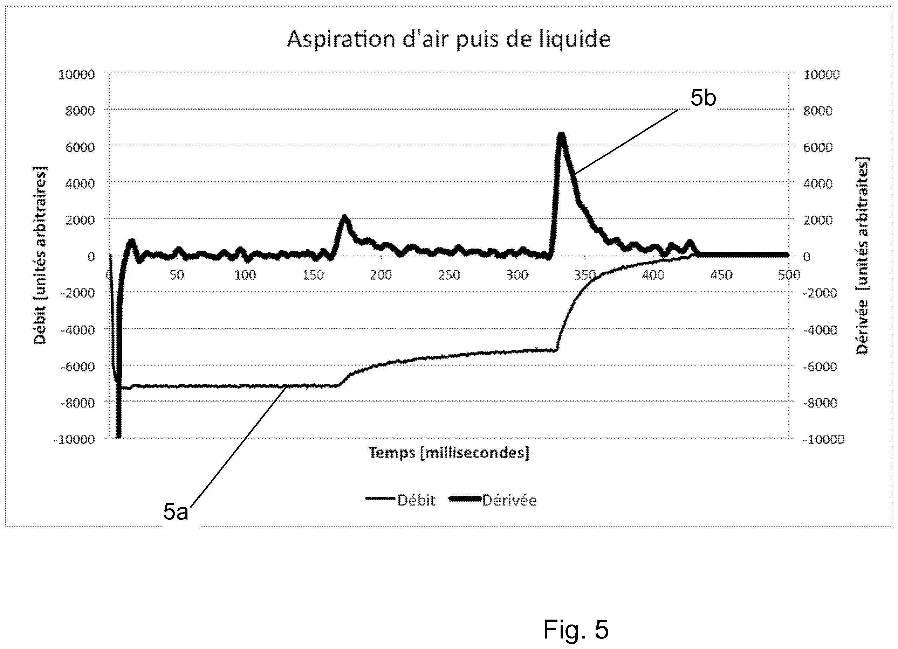

Sur la figure 5, la courbe 5a représente le débit du liquide aspiré et la courbe 5b représente la première dérivée du débit. On analyse la courbe 5b et on observe un pic inférieur au seuil prédéterminé autour de 30ms après le début de l'opération de pipetage, comme sur la figure 4. Toutefois, un pic de taille plus importante est observé environ 180ms après le début de l'opération. Ce pic de taille plus importante peut être comparé avec la valeur maximale de la figure 2 et est considéré comme supérieur au seuil prédéterminé. Dans une opération d'aspiration, une telle valeur maximale révèle un passage air-liquide de la pointe d'aspiration et de dispense 12. Mais si cette valeur maximale se produit plus de 40ms, de préférence plus de 30ms après le début de l'opération de pipetage, alors un message d'erreur est émis, signifiant que le dispositif de pipetage a aspiré de l'air avant d'aspirer du liquide.

Il est également possible de combiner plusieurs paramètres de manière à confirmer un message d'erreur. Par exemple, on peut d'abord examiner la valeur minimale de la première dérivée et vérifier si cette valeur minimale est inférieure au seuil prédéterminé. Comme décrit ci-dessus, cela signifie que le dispositif a aspiré du liquide puis de l'air. Puis, on considère la valeur maximale de la première dérivée, et on vérifie si cette valeur maximale est supérieure à un seuil prédéterminé et si cette valeur maximale se produit dans un intervalle de 40ms, de préférence de 30ms après le début de l'opération de pipetage, comme dans une aspiration normale. Cette deuxième étape permet de confirmer que le dispositif de pipetage a aspiré du liquide au début de l'opération.

On peut également d'abord considérer la valeur maximale de la première dérivée. Si la valeur maximale est supérieure à un seuil prédéterminé et si cette valeur maximale se produit après le temps nécessaire, dans les conditions normales de fonctionnement du dispositif de pipetage, pour atteindre un régime d'écoulement stationnaire du liquide dans la pipette, de préférence après 30ms, de préférence après 40ms après le début de l'opération de pipetage, cela signifie, comme décrit ci-dessus, que le dispositif a aspiré de l'air puis du liquide. Puis, toujours en considérant la valeur maximale de la première dérivée, comme dans le cas d'une aspiration d'air uniquement, on détecte l'absence d'un maximum supérieur au seuil prédéterminé avant le temps nécessaire, dans les conditions normales de fonctionnement du dispositif de pipetage, pour atteindre un régime d'écoulement stationnaire du liquide dans la pipette permettant de confirmer que le dispositif de pipetage a aspiré de l'air au début de l'opération.

Par analogie avec les erreurs d'aspiration décrites ci-dessus, on peut utiliser les mêmes informations, c'est-à-dire les valeurs maximale, minimale et le moment auquel ces valeurs sont atteintes, pour détecter des anomalies pendant une opération de dispense :
- une dispense d'air seulement, si l'embout est vide ;
- un échantillon trop petit (sur-dispense) si une opération de dispense débute avec du liquide mais se termine avec de l'air ;
- une dispense d'air avant la distribution du liquide (trailing air gap) ;
- une dispense d'air avant et après la distribution du liquide (trailing air gap et sur-dispense).

Il est à noter que le signe du débit pour la dispense est l'inverse de celui de l'aspiration. Par conséquence, pour des situations comparables, un minimum devient alors un maximum et vice-versa.

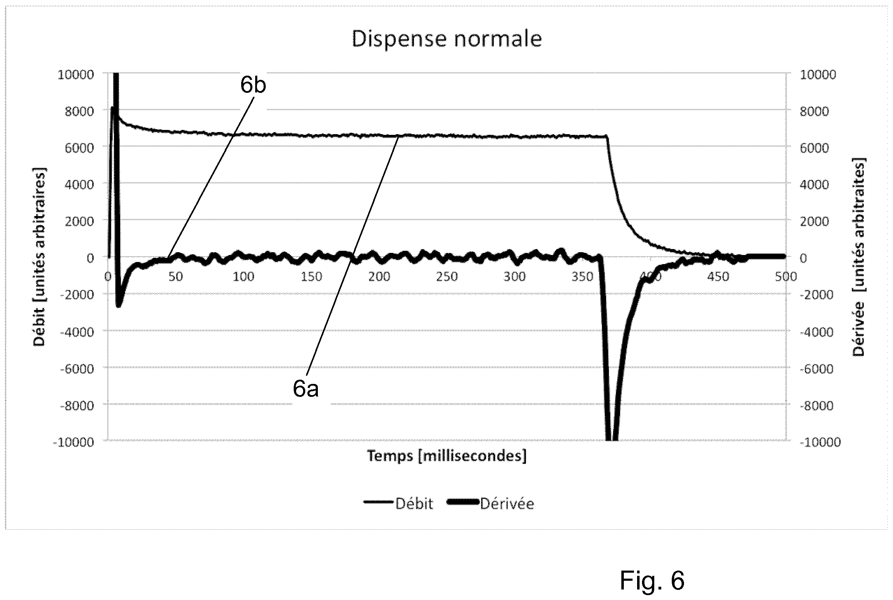

La figure 6 propose, à titre de comparaison, des courbes obtenues pour une opération de dispense normale. La courbe 6a représente le débit du liquide aspiré et la courbe 6b représente la première dérivée du débit. On analyse la courbe 6b et on peut remarquer une valeur maximale au début de la dispense due à l'ouverture de la vanne. Ce premier maximum est toujours présent et n'a pas d'incidence ni de signification particulière pour la détection d'une erreur. L'algorithme ne commencera l'analyse qu'après le passage de ce premier maximum et, dans les exemples ci-après, on fera abstraction de ce maximum initial. On peut également remarquer la présence d'une valeur minimale dépassant le seuil prédéterminé, pendant le temps nécessaire, dans les conditions normales de fonctionnement du dispositif de pipetage, pour atteindre un régime d'écoulement stationnaire du liquide dans la pipette. Cette durée est typiquement de l'ordre de 40ms, plus précisément inférieure à 30ms. On observe ensuite également une courbe de débit régulière, sans réelle valeur minimale ou maximale par rapport à des seuils prédéterminés, pendant le déroulement de l'opération et jusqu'au déclenchement de la fin de la dispense, lorsque le débit commence à chuter.

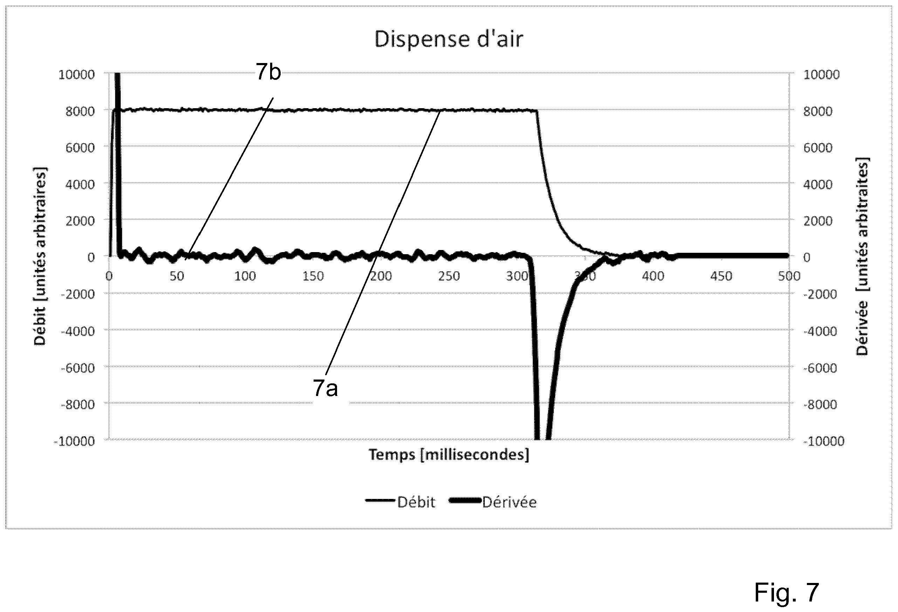

Sur la figure 7, la courbe 7a représente le débit du liquide dispensé et la courbe 7b représente la première dérivée du débit. On analyse la courbe 7b et on détecte la présence ou l'absence d'une valeur minimale, inférieure à un seuil prédéterminé. L'absence d'une telle valeur minimale au cours de l'opération de dispense, se traduit par un message d'erreur informant d'une dispense d'air uniquement. Cette détection peut être confirmée par l'absence d'un maximum supérieur à un seuil prédéterminé au cours de la dispense.

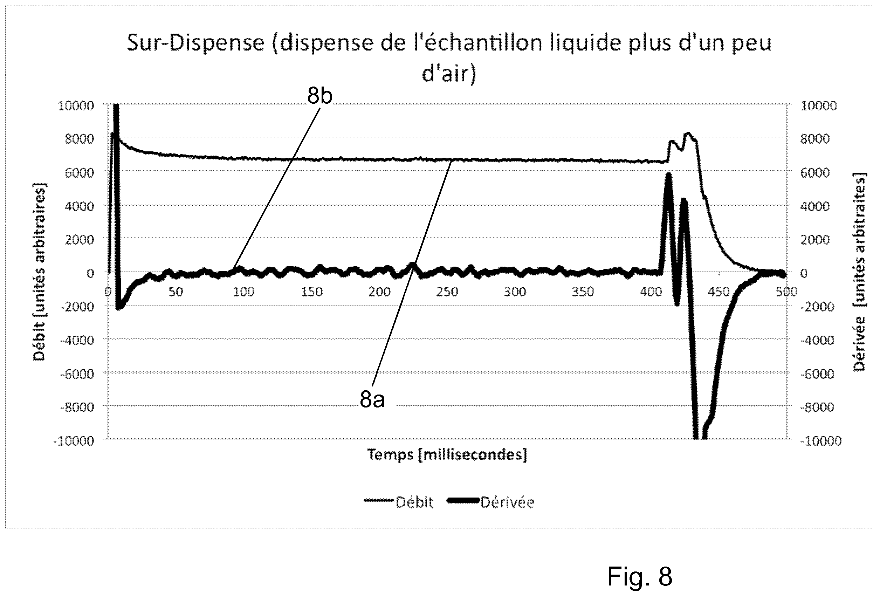

Sur la figure 8, la courbe 8a représente le débit du liquide dispensé et la courbe 8b représente la première dérivée du débit. On analyse la courbe 8b et on détecte la présence d'une valeur maximale, supérieure à un seuil prédéterminé. Dans une opération de dispense, une telle valeur maximale révèle un passage liquide-air dans la pointe d'aspiration et de dispense 12. Ce maximum se situe après un intervalle de temps de 40ms, de préférence de 30ms, nécessaire à l'établissement d'un régime d'écoulement stationnaire du liquide dans la pipette. La présence d'une telle valeur maximale se traduit par un message d'erreur informant d'une dispense d'air après la dispense de l'échantillon liquide (phénomène de sur-dispense).

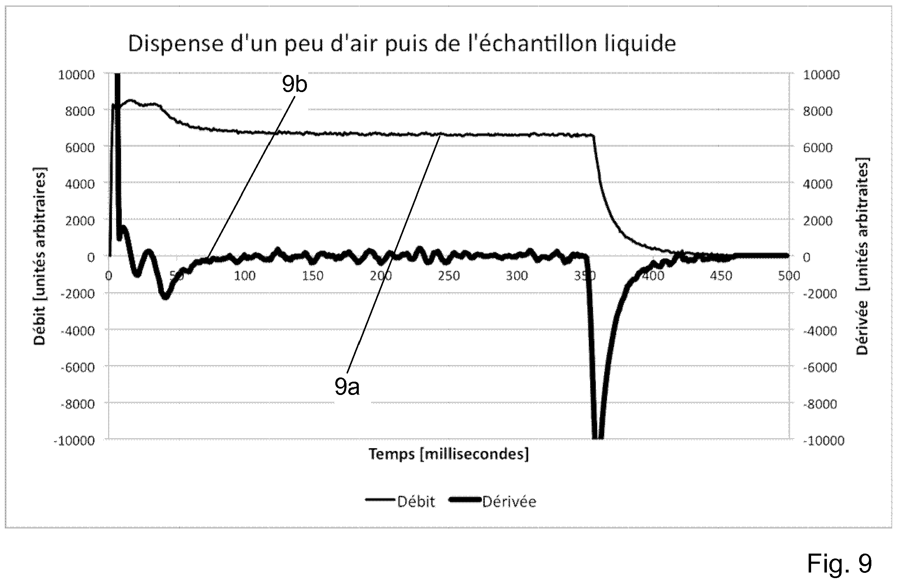

Sur la figure 9, la courbe 9a représente le débit du liquide dispensé et la courbe 9b représente la première dérivée du débit. On analyse la courbe 9b et on détecte la présence d'une valeur minimale, inférieure à un seuil prédéterminé. Dans une opération de dispense, une telle valeur minimale révèle un passage air-liquide de la pointe d'aspiration et de dispense 12. Si cette valeur minimale se situe après un intervalle de temps nécessaire à l'établissement d'un régime d'écoulement stationnaire du liquide dans la pipette, de préférence après 30ms, de préférence après 40ms, la présence d'une telle valeur minimale se traduit par un message d'erreur informant d'une dispense d'air avant la dispense de l'échantillon liquide.

Il est également possible de combiner plusieurs paramètres de manière à confirmer un message d'erreur. Par exemple, on peut d'abord examiner la valeur maximale de la première dérivée. Si on observe une valeur maximale supérieure à un seuil prédéterminé, cela signifie, comme décrit ci-dessus, que le dispositif a dispensé du liquide puis de l'air. Puis, on considère la valeur minimale de la première dérivée. La présence d'un minimum inférieur au seuil prédéterminé avant le temps nécessaire, dans les conditions normales de fonctionnement du dispositif de pipetage, pour atteindre un régime d'écoulement stationnaire du liquide dans la pipette, similaire à une dispense normale, permet de confirmer que le dispositif de pipetage a dispensé du liquide au début de l'opération.

On peut également d'abord considérer la valeur minimale de la première dérivée. Si on détecte une valeur minimale inférieure au seuil prédéterminé, après le temps nécessaire, dans les conditions normales de fonctionnement du dispositif de pipetage, pour atteindre un régime d'écoulement stationnaire du liquide, alors, comme décrit ci-dessus, cela signifie que le dispositif a dispensé de l'air puis du liquide. Puis, comme dans le cas d'une dispense d'air uniquement, on considère la valeur minimale de la première dérivée, de liquide uniquement, et on vérifie l'absence d'une telle valeur minimale inférieur à un seuil prédéterminé, avant le temps nécessaire, dans les conditions normales de fonctionnement du dispositif de pipetage, pour atteindre un régime d'écoulement stationnaire du liquide, de préférence dans un intervalle de 40ms, de préférence de 30ms après le début de l'opération de pipetage. Cette deuxième étape permet de confirmer que le dispositif de pipetage a dispensé de l'air au début de l'opération.

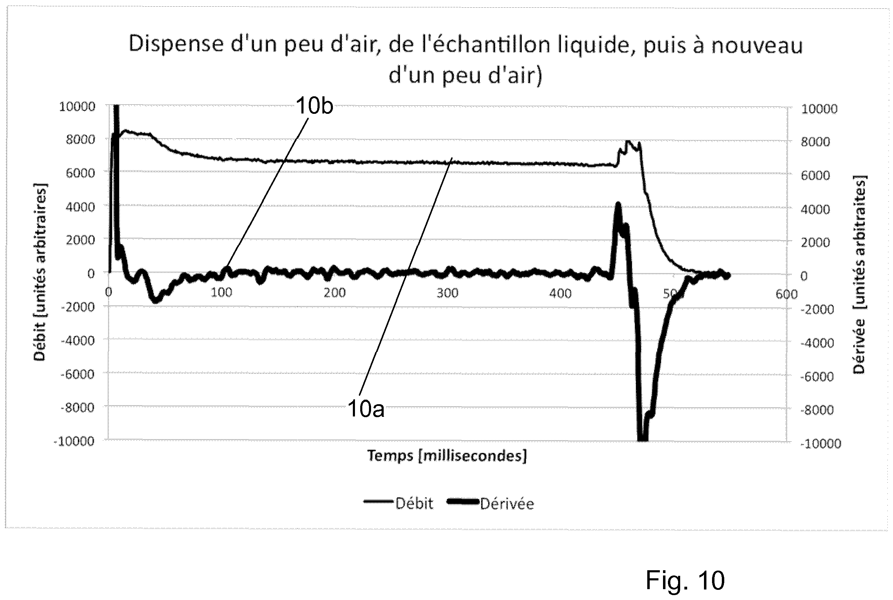

Sur la figure 10, la courbe 10a représente le débit du liquide dispensé et la courbe 10b représente la première dérivée du débit. La situation illustrée est la combinaison des figures 8 et 9. On détecte à la fois une valeur minimale au-delà d'un intervalle de temps de 40ms et une valeur maximale qui vient après le minimum. Un message d'erreur signifiant que de l'air a été dispensé au début et à la fin de l'opération, avec une dispense de liquide entre les deux dispenses d'air, est alors transmis.

La méthode selon l'invention permet donc de détecter des événements erronés susceptibles de survenir lors d'opérations de pipetage, en aspiration ou en dispense, de manière indépendante des volumes et débits utilisés.

En complément à la détection d'erreur effectuée après une opération de pipetage, la méthode selon l'invention propose de combiner une détection d'erreur en temps-réel, ce qui permet d'obtenir une bonne précision et une très bonne pertinence dans la détection d'erreur.

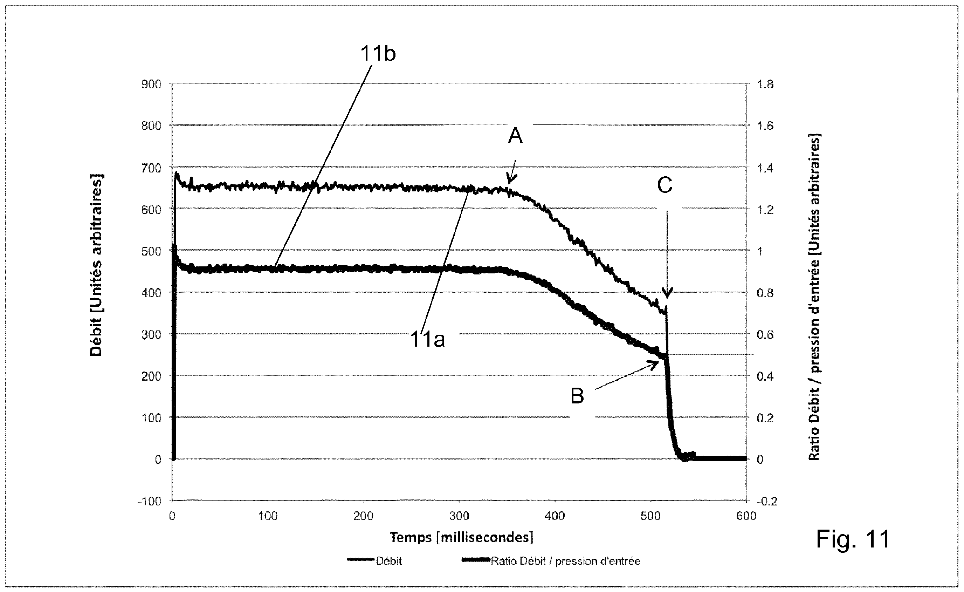

Dans ce but, pendant l'opération, le signe du débit acquis est comparé avec des seuils prédéfinis afin de s'assurer que le réglage du vide ou de la pression dans le dispositif de pipetage est bien conforme à l'opération prescrite (aspiration ou dispense). Simultanément, on vérifie si la pointe d'aspiration et de dispense est bouchée ou obstruée en calculant le rapport du débit mesuré sur la valeur de réglage de la pression et en comparant ce rapport à un seuil prédéterminé. Par exemple, sur la figure 11, on a représenté le débit sur la courbe 11a et le rapport débit/pression d'entrée sur la courbe 11 b. L'occlusion débute au niveau de la flèche A et le débit chute progressivement. Un message d'erreur est transmis lorsque le rapport atteint, par exemple, le seuil de 0,5 (flèche B). L'opération est alors stoppée (flèche C) et on observe que le débit chute jusqu'à 0.

De plus, le temps écoulé depuis le début de l'opération est comparé avec une durée maximale prédéfinie. Si le temps écoulé est inférieur à la durée maximale prédéfinie, l'opération continue. Sinon, l'opération est stoppée.

Le contrôle en temps réel permet également de stopper l'opération de pipetage s'il n'y a pas suffisamment de liquide et si de l'air est aspiré ou dispensé. Pour ce faire, le calcul de la dérivée à intervalle réduit de quelques millisecondes permet de commander la source de pression ou de vide 15 ou la vanne 22 en cas de dépassement d'une valeur limite préétablie. Dans le cas de la figure 3, la forte diminution de la valeur de la dérivée aux environs des 300 millisecondes, correspond à une aspiration d'air. La comparaison, après le début de l'aspiration, de la valeur de la dérivée du débit avec une valeur prédéfinie, provoque l'arrêt de l'aspiration si la valeur de la dérivée est inférieure à cette valeur. Dans l'exemple de la figure 8, la forte augmentation de la valeur de la dérivée aux environs de 400 millisecondes, correspond à une dispense d'air. La comparaison, après le début de la dispense, de la valeur de la dérivée du débit avec une valeur prédéfinie, provoque l'arrêt de la dispense si la valeur de la dérivée est supérieure à cette valeur.

Lorsque la pointe d'aspiration et de dispense met en oeuvre un embout, ce dernier en tant que telle ne fait pas partie du dispositif de pipetage. Cependant, les dimensions de l'embout peuvent influencer, idéalement améliorer, la méthode de détection d'erreur effectuée après une opération de pipetage, telle que décrite ci-dessus. Un diamètre de l'embout plus petit va améliorer la « résolution » de la méthode en améliorant l'intensité des valeurs minimale et maximale. L'homme du métier sera capable, à partir de tests et d'expériences de routine d'optimiser le rapport entre le diamètre de l'embout et le diamètre du rétrécissement fluidique du capteur, de manière à améliorer la résolution de la première dérivée de la courbe du débit en fonction du temps. L'optimisation des dimensions de l'embout peut être considérée comme une étape préliminaire de la méthode de détection d'erreur selon l'invention. Les valeurs numériques des seuils de détection pour le minimum et maximum de la dérivée peuvent être choisies en fonction de l'embout utilisé.

Il a été vu ci-dessus comment l'étude et la comparaison des valeurs maximales et minimales de la dérivée du débit et des moments auxquels elles se produisent permettent d'identifier le début et la fin d'une opération de pipetage. Pour une opération d'aspiration, on détecte le passage de l'air au liquide et on l'associe avec le début de l'aspiration. On détecte le passage du liquide à l'air et on l'associe avec la fin de l'aspiration. Pour une opération de dispense, on a décrit ci-dessus, en lien avec la figure 6, que l'on peut identifier le début et la fin de la dispense.

La connaissance de ces données permet d'obtenir le volume de liquide aspiré ou dispensé. Il convient pour cela de calculer l'intégrale de la courbe représentant le débit en fonction du temps entre le début et la fin d'une phase d'aspiration ou de dispense du liquide. La valeur obtenue représente le volume du liquide aspiré ou dispensé.

## Revendications

1. Méthode de contrôle d'opérations de pipetage réalisées par un dispositif de pipetage (10) comprenant :
- une pointe d'aspiration et de dispense (12) destinée à être plongée dans un réservoir de liquide pour prélever une certaine quantité de ce liquide,
- une entrée (14) destinée à être connectée à une source de pression ou de vide (15),
- un circuit électronique (18) commandant l'opération de pipetage et apte à communiquer des informations à un ordinateur distant (19), le dispositif comportant en outre un système (16) capable de mesurer une valeur représentant le débit du liquide aspiré ou dispensé pendant l'opération de pipetage, ladite méthode étant basée sur la détection de variations de débit et du moment auquel ces variations se produisent, **caractérisée en ce que** ladite méthode comprend les étapes suivantes :
- obtenir une courbe représentant le débit en fonction du temps du liquide aspiré ou dispensé par la pipette,
- calculer la première dérivée de ladite courbe,
- identifier et enregistrer les valeurs maximale et minimale de ladite première dérivée et les moments auxquels les valeurs maximales et minimales se produisent,
- comparer les valeurs maximales et minimales et les moments auxquels les valeurs maximales et minimales se produisent, avec des références prédéterminées pour lesdites valeurs et pour les moments auxquels elles se produisent,
- selon le résultat de la comparaison, fournir un message de validation ou d'erreur.

2. Méthode selon la revendication 1, **caractérisée en ce qu'**un message d'erreur signifiant que le dispositif de pipetage a aspiré du liquide puis de l'air est fourni, si une valeur minimale inférieure à un premier seuil prédéterminé est détectée au cours d'une aspiration, avant la fin de ladite aspiration.

3. Méthode selon la revendication 1, **caractérisée en ce qu'**un message d'erreur signifiant que le dispositif de pipetage a aspiré de l'air uniquement est fourni, si la valeur maximale de la première dérivée est inférieure à un deuxième seuil prédéterminé.

4. Méthode selon la revendication 3, **caractérisée en ce qu'**on détecte également l'absence d'une valeur minimale inférieure à un premier seuil prédéterminé au cours de l'opération d'aspiration, le message d'erreur signifiant que le dispositif a aspiré de l'air uniquement est émis si l'on ne détecte, au cours de l'opération d'aspiration, ni de valeur minimale inférieure au premier seuil prédéterminé, ni de valeur maximale supérieure au deuxième seuil prédéterminé.

5. Méthode selon la revendication 1, **caractérisée en ce qu'**un message d'erreur signifiant que le dispositif de pipetage a aspiré de l'air puis du liquide est fourni, si la valeur maximale de la première dérivée est supérieure à un deuxième seuil prédéterminé et si ladite valeur maximale se produit après le temps nécessaire, dans les conditions normales de fonctionnement du dispositif de pipetage, pour atteindre un régime d'écoulement stationnaire du liquide dans la pipette, de préférence après 30ms, de préférence après 40ms après le début de l'opération de pipetage.

6. Méthode selon la revendication 2, dans laquelle on considère d'abord la valeur minimale de la première dérivée selon la méthode de la revendication 2 puis, si ladite valeur minimale se produit avant que la quantité de liquide à prélever soit aspirée et si ladite valeur minimale est inférieure au premier seuil prédéterminé, on considère la valeur maximale de la première dérivée, la présence d'un maximum supérieur au deuxième seuil prédéterminé avant le temps nécessaire, dans les conditions normales de fonctionnement du dispositif de pipetage, pour atteindre un régime d'écoulement stationnaire du liquide dans la pipette permettant de vérifier que le dispositif de pipetage a aspiré du liquide au début de l'opération, puis de l'air.

7. Méthode selon la revendication 5, dans laquelle on considère d'abord la valeur maximale de la première dérivée selon la revendication 5, puis si la valeur maximale est supérieure au deuxième seuil prédéterminé et si ladite valeur maximale se produit après le temps nécessaire, dans les conditions normales de fonctionnement du dispositif de pipetage, pour atteindre un régime d'écoulement stationnaire du liquide dans la pipette, de préférence après 30ms, de préférence après 40ms après le début de l'opération de pipetage, puis on considère la valeur maximale de la première dérivée, l'absence d'un maximum supérieur au deuxième seuil prédéterminé avant le temps nécessaire, dans les conditions normales de fonctionnement du dispositif de pipetage, pour atteindre un régime d'écoulement stationnaire du liquide dans la pipette permettant de vérifier que le dispositif de pipetage a aspiré de l'air au début de l'opération, puis du liquide.

8. Méthode selon la revendication 1, **caractérisée en ce qu'**un message d'erreur signifiant que le dispositif a dispensé de l'air après avoir dispensé l'échantillon est émis, si on détecte une valeur maximale supérieure à un premier seuil prédéterminé.

9. Méthode selon la revendication 1, **caractérisée en ce qu'**un message d'erreur signifiant que le dispositif a dispensé uniquement de l'air est émis, si la valeur minimale détectée au cours d'une opération de dispense est supérieure à un deuxième seuil prédéterminé.

10. Méthode selon la revendication 9, **caractérisé en ce qu'**on détecte également l'absence d'une valeur maximale supérieure à un premier seuil prédéterminé au cours de l'opération de dispense, le message d'erreur signifiant que le dispositif a dispensé uniquement de l'air est émis si l'on ne détecte, au cours d'une opération de dispense, ni de valeur minimale inférieure au deuxième seuil prédéterminé, ni de valeur maximale supérieur au premier seuil prédéterminé.

11. Méthode selon la revendication 1 ou selon la revendication 7, **caractérisée en ce qu'**un message d'erreur signifiant que le dispositif a dispensé de l'air avant d'avoir dispensé l'échantillon est émis si on détecte une valeur minimale inférieure au deuxième seuil prédéterminé après le temps nécessaire, dans les conditions normales de fonctionnement du dispositif de pipetage, pour atteindre un régime d'écoulement stationnaire du liquide dans la pipette, de préférence après 30ms, de préférence après 40ms après le début de l'opération de pipetage.

12. Méthode selon la revendication 8, dans laquelle on considère d'abord la valeur maximale de la première dérivée selon la méthode de la revendication 8 puis, si ladite valeur maximale se produit avant que la quantité de liquide à prélever soit aspirée et si ladite valeur maximale est supérieure au premier seuil prédéterminé, on considère la valeur minimale de la première dérivée, la présence d'une valeur minimale inférieure au deuxième seuil prédéterminé avant le temps nécessaire, dans les conditions normales de fonctionnement du dispositif de pipetage, pour atteindre un régime d'écoulement stationnaire du liquide dans la pipette permettant de vérifier que le dispositif de pipetage a dispensé du liquide au début de l'opération, puis de l'air.

13. Méthode selon la revendication 11, dans laquelle on considère d'abord la valeur minimale de la première dérivée selon la revendication 11, puis si la valeur minimale est inférieure au deuxième seuil prédéterminé et si ladite valeur minimale se produit après le temps nécessaire, dans les conditions normales de fonctionnement du dispositif de pipetage, pour atteindre un régime d'écoulement stationnaire du liquide dans la pipette, de préférence après 30ms, de préférence après 40ms après le début de l'opération de pipetage, on considère ladite valeur minimale de la première dérivée, l'absence d'une valeur minimale inférieure au deuxième seuil prédéterminé avant le temps nécessaire, dans les conditions normales de fonctionnement du dispositif de pipetage, pour atteindre un régime d'écoulement stationnaire du liquide dans la pipette permettant de vérifier que le dispositif de pipetage a dispensé de l'air au début de l'opération, puis du liquide.

14. Méthode selon la revendication 8 et selon la revendication 11, **caractérisée en ce qu'**un message d'erreur signifiant que le dispositif a dispensé de l'air, puis du liquide, puis de l'air, est fourni, si on détecte après le temps nécessaire, dans les conditions normales de fonctionnement du dispositif de pipetage, pour atteindre un régime d'écoulement stationnaire du liquide dans la pipette, à la fois une valeur minimale inférieure au deuxième seuil prédéterminé, et une valeur maximale supérieure au premier seuil prédéterminé, ladite valeur maximale étant détectée à un moment postérieur au temps de la détection du minimum.

15. Méthode selon l'une des revendications précédentes, **caractérisée en ce que** les valeurs maximale et minimale de la première dérivée de ladite courbe sont normalisées par le débit et **en ce que** les dépassements des seuils prédéterminés sont relatés aux valeurs normalisées.

16. Méthode selon l'une des revendications précédentes, **caractérisée en ce qu'**elle combine une détection d'erreurs en temps réel implémentée durant l'étape d'obtention de la courbe représentative du débit.

17. Méthode selon la revendication 16, **caractérisée en ce que** ladite détection d'erreurs en temps réel implique une étape de comparaison du signe du débit mesuré avec une valeur prédéfinie pour confirmer qu'une pression ou un vide adéquat est appliqué, respectivement pour une opération de dispense ou d'aspiration, et **en ce que** si le signe du débit correspond à l'opération demandée par un utilisateur, l'opération est poursuive, sinon, l'opération est stoppée.

18. Méthode selon l'une des revendications 16 et 17, **caractérisée en ce que** ladite détection d'erreurs en temps réel implique une étape de calcul du rapport du débit mesuré, divisé par une valeur de réglage de la pression, ledit rapport étant comparé avec un seuil prédéterminé, si ledit rapport est supérieur audit seuil prédéterminé, l'opération est poursuivie, sinon, l'opération est stoppée.

19. Méthode selon l'une des revendications 16 à 18, **caractérisée en ce que** ladite détection d'erreurs en temps réel implique une étape de comparaison du temps écoulé depuis le début de l'opération avec une durée maximale prédéfinie, si le temps écoulé est inférieur à la durée maximale prédéfinie, l'opération est poursuivie, sinon, l'opération est stoppée.

20. Méthode selon l'une des revendications 16 à 19, **caractérisé en ce que** ladite détection d'erreur en temps réel comporte une étape de comparaison, à partir du début de l'aspiration, de la valeur de la dérivée du débit avec une valeur prédéfinie, si la valeur de la dérivée est inférieure à la valeur prédéfinie, l'opération d'aspiration est stoppée.

21. Méthode selon l'une des revendications 16 à 19, **caractérisé en ce que** ladite détection d'erreur en temps réel comporte une étape de comparaison, à partir du début de la dispense, de la valeur de la dérivée du débit avec une valeur prédéfinie, si la valeur de la dérivée est supérieure à la valeur prédéfinie, l'opération de dispense est stoppée.

22. Méthode selon l'une des revendications précédentes, dans laquelle ledit système capable de mesurer une valeur représentant le débit du liquide aspiré ou dispensé est doté d'un capteur de débit et dans laquelle la pointe d'aspiration et de dispense est dotée d'un embout amovible disposé pour pénétrer dans le liquide à aspirer, le rapport entre le diamètre de l'embout sur le diamètre du capteur étant optimisé de manière à améliorer la résolution de la première dérivée de la courbe représentant le débit en fonction du temps.

23. Méthode selon la revendication 1, **caractérisée en ce qu'**elle comprend une étape de calcul du volume du liquide aspiré ou dispensé, ledit calcul de volume étant obtenu en :
- identifiant, à partir des valeurs maximale et minimale de la dérivée, le début et la fin d'une opération d'aspiration ou de dispense,
- intégrant le débit en fonction du temps entre les valeurs précédemment déterminées du début et de fin de l'opération d'aspiration ou de dispense.

## Patentansprüche

1. Verfahren zur Kontrolle von Pipettiervorgängen, durchgeführt durch eine Pipettiervorrichtung (10), umfassend:
- eine Ansaug- und Abgabespitze (12), die ausgelegt ist, um in einen Flüssigkeitsbehälter getaucht zu werden, um eine bestimmte Menge dieser Flüssigkeit zu entnehmen,
- einen Eingang (14), der ausgelegt ist, um mit einer Druck- oder Vakuumquelle (15) verbunden zu sein,
- eine elektrische Schaltung (18), die den Pipettiervorgang steuert und geeignet ist, Informationen an einen entfernten Computer (19) zu kommunizieren, wobei die Vorrichtung außerdem ein System (16) umfasst, das dazu in der Lage ist, einen Wert zu messen, der den Durchsatz der Flüssigkeit darstellt, die während des Pipettiervorgangs angesaugt oder abgegeben wird, wobei das Verfahren auf dem Nachweis von Variationen des Durchsatzes und des Zeitpunkts basiert, an dem sich diese Variationen ergeben, **dadurch gekennzeichnet, dass** des Verfahren die folgenden Schritte umfasst:
- Erhalten einer Kurve, die den Durchsatz in Abhängigkeit von Zeit der Flüssigkeit, die von der Pipette angesaugt und abgegeben wurde, darstellt,
- Berechnen der ersten Ableitung der Kurve,
- Identifizieren und Registrieren der maximalen und minimalen Werte der ersten Ableitung und der Zeitpunkte, an denen sich die maximalen und minimalen Werte ergeben,
- Vergleichen der maximalen und minimalen Werte und der Zeitpunkte, an denen sich die maximalen und minimalen Werte ergeben, mit vorbestimmten Referenzen für Werte und für die Zeitpunkte, an denen sie sich ergeben,
- je nach dem Ergebnis des Vergleichs, Liefern einer Validierungs- oder Fehlermeldung.

2. Verfahren nach Anspruch 1, **dadurch gekennzeichnet, dass** eine Fehlermeldung, die bedeutet, dass die Pipettiervorrichtung Flüssigkeit, dann Luft, angesaugt hat, geliefert wird, wenn ein minimaler Wert unter einem ersten vorbestimmten Schwellenwert im Laufe einer Ansaugung, vor dem·Ende der Ansaugung, festgestellt wird.

3. Verfahren nach Anspruch 1, **dadurch gekennzeichnet, dass** eine Fehlermeldung, die bedeutet, dass die Pipettiervorrichtung nur Luft, angesaugt hat, geliefert wird, wenn der maximale Wert der ersten Ableitung unter einem zweiten vorbestimmten Schwellenwert liegt.

4. Verfahren nach Anspruch 3, **dadurch gekennzeichnet, dass** auch die Abwesenheit eines minimalen Werts unter einem ersten vorbestimmten Schwellenwert im Laufe des Ansaugvorgangs nachgewiesen wird, wobei die Fehlermeldung, die bedeutet, dass die Pipettiervorrichtung nur Luft, angesaugt hat, emittiert wird, wenn im Laufe des Ansaugvorgangs weder ein minimaler Wert unter dem ersten vorbestimmten Schwellenwert noch ein maximaler Wert über dem zweiten vorbestimmten Schwellenwert nachgewiesen wird.

5. Verfahren nach Anspruch 1, **dadurch gekennzeichnet, dass** eine Fehlermeldung, die bedeutet, dass die Pipettiervorrichtung Luft, dann Flüssigkeit angesaugt hat, wenn der maximale Wert der ersten Ableitung über einem zweiten vorbestimmten Schwellenwert liegt, und wenn sich der maximale Wert nach der erforderlichen Zeit ergibt, unter normalen Betriebsbedingungen der Pipettiervorrichtung geliefert wird, um einen stationären Ablaufzustand der Flüssigkeit in der Pipette zu erzielen, vorzugsweise nach 30 ms, vorzugsweise nach 40 ms nach dem Beginn des Pipettiervorgangs.

6. Verfahren nach Anspruch 2, wobei zuerst der minimale Wert der ersten Ableitung gemäß dem Verfahren von Anspruch 2 in Betracht gezogen wird, dann, wenn sich der minimale Wert ergibt, vor die Menge von Flüssigkeit, die entnommen werden soll, angesaugt ist, und wenn der minimale Wert unter dem ersten vorbestimmten Schwellenwert liegt, der maximale Wert der ersten Ableitung in Betracht gezogen wird, wobei die Anwesenheit eines Maximums über einem zweiten vorbestimmten Schwellenwert vor der erforderlichen Zeit unter normalen Betriebsbedingungen der Pipettiervorrichtung um einen stationären Ablaufzustand der Flüssigkeit in der Pipette zu erzielen, ermöglicht, zu überprüfen, ob die Pipettiervorrichtung Flüssigkeit zu Beginn des Vorgangs, dann Luft angesaugt hat.

7. Verfahren nach Anspruch 5, wobei zunächst der maximale Wert der ersten Ableitung nach Anspruch 5 in Betracht gezogen wird, dann, wenn der maximale Wert über dem zweiten vorbestimmten Schwellenwert liegt, und wenn sich der maximale Wert nach der erforderlichen Zeit unter normalen Betriebsbedingungen der Pipettiervorrichtung, um einen stationären Ablaufzustand der Flüssigkeit in der Pipette zu erzielen, vorzugsweise nach 30 ms, vorzugsweise nach 40 ms nach dem Beginn des Pipettiervorgangs ergibt, der maximale Wert der ersten Ableitung in Betracht gezogen wird, wobei die Anwesenheit eines Maximums über dem zweiten vorbestimmten Schwellenwert vor der erforderlichen Zeit, unter normalen Betriebsbedingungen der Pipettiervorrichtung, um einen stationären Ablaufzustand der Flüssigkeit in der Pipette zu erzielen, ermöglicht, zu überprüfen, ob die Pipettiervorrichtung Luft zu Beginn des Vorgangs, dann Flüssigkeit angesaugt hat.

8. Verfahren nach Anspruch 1, **dadurch gekennzeichnet, dass** eine Fehlermeldung, die bedeutet, dass die Vorrichtung Luft abgegeben hat, nachdem die Probe abgegeben wurde, emittiert wird, wenn ein maximaler Wert über einem ersten vorbestimmten Schwellenwert nachgewiesen wird.

9. Verfahren nach Anspruch 1, **dadurch gekennzeichnet, dass** eine Fehlermeldung, die bedeutet, dass die Vorrichtung nur Luft abgegeben hat, emittiert wird, wenn der minimale Wert, der im Laufe eines Abgabevorgangs nachgewiesen wird, über einem zweiten vorbestimmten Schwellenwert liegt.

10. Verfahren nach Anspruch 9, **dadurch gekennzeichnet, dass** auch die Abwesenheit eines maximalen Werts über einem ersten vorbestimmten Schwellenwert im Laufe des Abgabevorgangs nachgewiesen wird, wobei die Fehlermeldung, die bedeutet, dass die Vorrichtung nur Luft abgegeben hat, emittiert wird, wenn im Laufe des Abgabevorgangs weder der minimale Wert unter dem zweiten vorbestimmten Schwellenwert, noch der maximale Wert über dem ersten vorbestimmten Schwellenwert nachgewiesen wird.

11. Verfahren nach Anspruch 1 oder Anspruch 7, **dadurch gekennzeichnet, dass** eine Fehlermeldung, die bedeutet, dass die Vorrichtung Luft abgegeben hat, vor die Probe abgegeben wurde, emittiert wird, wenn ein minimaler Wert, unter dem zweiten vorbestimmte Wert nach der erforderlichen Zeit unter den normalen Betriebsbedingungen der Pipettiervorrichtung nachgewiesen wird, um einen stationären Ablaufzustand der Flüssigkeit in der Pipette zu erzielen, vorzugsweise nach 30 ms, vorzugsweise nach 40 ms nach dem Beginn des Pipettiervorgangs.

12. Verfahren nach Anspruch 8, wobei zunächst der maximale Wert der ersten Ableitung nach Anspruch 8 in Betracht gezogen wird, dann, wenn sich der maximale Wert ergibt, vor die Menge von Flüssigkeit, die entnommen werden soll, angesaugt ist, und wenn der maximale Wert über einem ersten vorbestimmten Schwellenwert liegt, der minimale Wert der ersten Ableitung in Betracht gezogen wird, wobei die Anwesenheit eines minimalen Werts, unter dem zweiten vorbestimmte Wert vor der erforderlichen Zeit unter den normalen Betriebsbedingungen der Pipettiervorrichtung, um einen stationären Ablaufzustand der Flüssigkeit in der Pipette zu erzielen, ermöglicht, zu überprüfen, ob die Pipettiervorrichtung Flüssigkeit zu Beginn des Vogangs, dann Luft abgegeben hat.

13. Verfahren nach Anspruch 11, wobei zuerst der minimale Wert der ersten Ableitung nach Anspruch 11 in Betracht gezogen wird, dann, wenn der minimale Wert unter dem zweiten vorbestimmten Schwellenwert liegt, und wenn sich der maximale Wert nach der erforderlichen Zeit ergibt, unter den normalen Betriebsbedingungen der Pipettiervorrichtung, um einen stationären Ablaufzustand der Flüssigkeit in der Pipette zu erzielen, vorzugsweise nach 30 ms, vorzugsweise nach 40 ms nach dem Beginn des Pipettiervorgangs, der minimale Wert der ersten Ableitung in Betracht gezogen wird, wobei die Abwesenheit eines minimalen Werts, unter dem zweiten vorbestimmte Schwellenwert vor der erforderlichen Zeit unter den normalen Betriebsbedingungen der Pipettiervorrichtung, um einen stationären Ablaufzustand der Flüssigkeit in der Pipette zu erzielen, ermöglicht, zu überprüfen, ob die Pipettiervorrichtung Luft zu Beginn des Vorgangs, dann Flüssigkeit abgegeben hat.

14. Verfahren nach Anspruch 8 oder Anspruch 11, **dadurch gekennzeichnet, dass** eine Fehlermeldung, die bedeutet, dass die Vorrichtung Luft, dann Flüssigkeit, dann Luft abgegeben hat, geliefert wird, wenn nach der erforderlichen Zeit, unter den normalen Betriebsbedingungen der Pipettiervorrichtung, um einen stationären Ablaufzustand der Flüssigkeit in der Pipette zu erzielen, gleichzeitig ein minimaler Wert unter dem zweiten vorbestimmten Schwellenwert und ein maximaler Wert über dem ersten vorbestimmten Schwellenwert vorliegt, wobei der maximale Wert zu einem Zeitpunkt nach der Zeit des Nachweises des Minimums nachgewiesen wird.

15. Verfahren nach einem der vorhergehenden Ansprüche, **dadurch gekennzeichnet, dass** die maximalen und minimalen Werte der ersten Ableitung der Kurve durch den Durchsatz normalisiert werden, und dadurch, dass die Überschreitungen der vorbestimmten Schwellenwerte an die normalisierten Werte berichtet werden.

16. Verfahren nach einem der vorhergehenden Ansprüche, **dadurch gekennzeichnet, dass** es einen Nachweis von Fehlern in Echtzeit kombiniert, implementiert während des Schritts des Erhalten der Kurve, die den Durchsatz darstellt.

17. Verfahren nach Anspruch 16, **dadurch gekennzeichnet, dass** der Nachweis von Fehlern in Echtzeit einen Schritt des Vergleichens des Vorzeichens des gemessenen Durchsatzes mit einem vordefinierten Wert impliziert, um zu bestätigen, dass ein angemessener Druck bzw. ein angemessenes Vakuum für einen Abgabe- oder Ansaugvorgang angewendet wird, und dadurch, dass, wenn das Vorzeichen des Durchsatzes dem Vorgang entspricht, der von einem Benutzer erfordert wird, der Vorgang fortgesetzt wird, ansonsten wird der Vorgang gestoppt.

18. Verfahren nach einem der Ansprüche 16 und 17, **dadurch gekennzeichnet, dass** der Nachweis von Fehlern in Echtzeit einen Schritt des Berechnens des Bezugs des gemessenen Durchsatzes, geteilt durch einen Einstellwert des Drucks, impliziert, wobei der Bezug mit einem vorbestimmten Schwellenwert verglichen wird, und wenn der Bezug über dem vorbestimmten Schwellenwert liegt, wird der Vorgang fortgesetzt, ansonsten wird der Vorgang gestoppt.

19. Verfahren nach einem der Ansprüche 16 bis 18, **dadurch gekennzeichnet, dass** der Nachweis von Fehlern in Echtzeit einen Schritt des Vergleichens der Zeit, die seit dem Beginn des Vorgangs verstrichen ist, mit einer maximalen vordefinierten Dauer impliziert, und wenn die verstrichene Zeit unter der maximalen vordefinierte Dauer liegt, wird der Vorgang fortgesetzt, ansonsten wird der Vorgang gestoppt.

20. Verfahren nach einem der Ansprüche 16 bis 19, **dadurch gekennzeichnet, dass** der Nachweis von Fehlern in Echtzeit einen Schritt des Vergleichens, ab dem Beginn des Ansaugens, des Werts der Ableitung des Durchsatzes mit einem vordefinierten Wert umfasst, und wenn der Wert der Ableitung unter dem vordefinierten Wert liegt, wird der Ansaugvorgang gestoppt.

21. Verfahren nach einem der Ansprüche 16 bis 19, **dadurch gekennzeichnet, dass** der Nachweis von Fehlern in Echtzeit einen Schritt des Vergleichens, ab dem Beginn der Abgabe, des Werts der Ableitung des Durchsatzes mit einem vordefinierten Wert umfasst, und wenn der Wert der Ableitung über dem vordefinierten Wert liegt, wird der Abgabevorgang gestoppt.

22. Verfahren nach einem der vorhergehenden Ansprüche, wobei das System, das dazu in der Lage ist, einen Wert zu messen, der den Durchsatz der Flüssigkeit darstellt, die angesaugt oder abgegeben wird, mit einem Durchsatzsensor ausgestattet ist, und wobei die Ansaug- und Abgabespitze mit einem abnehmbaren Ansatzstück ausgestattet ist, das angeordnet ist, um in die Flüssigkeit, die angesaugt werden soll, einzudringen, wobei der Bezug zwischen dem Durchmesser des Ansatzstücks und dem Durchmesser des Sensors optimiert ist, um die Auflösung der ersten Ableitung der Kurve zu verbessern, die den Durchsatz in Abhängigkeit von der Zeit darstellt.

23. Verfahren nach Anspruch 1, **dadurch gekennzeichnet, dass** es einen Schritt des Berechnens des Volumens der Flüssigkeit umfasst, die angesaugt oder abgegeben wird, wobei die Berechnung des Volumens erhalten wird durch:
- Identifizieren, aus den maximalen und minimalen Werten der Ableitung, des Beginns und des Endes des Ansaug- oder des Abgabevorgangs,
- Integrieren des Durchsatzes in Abhängigkeit von der Zeit zwischen zuvor bestimmten Werten des Beginns und des Endes des Ansaug- oder Abgabevorgangs.

## Claims

1. A method for controlling pipetting operations performed by a pipetting device (10), comprising:
- an aspirating and dispensing tip (12) intended to be dipped in a liquid reservoir to withdraw a certain quantity of this liquid,
- an inlet (14) intended to be connected to a pressure or vacuum source (15),
- an electronic circuit (18) commanding the pipetting operation and able to communicate information to a remote computer (19),
the device further including a system (16) capable of measuring a value representing the flow rate of the liquid aspirated or dispensed during the pipetting operation, said method being based on the detection of flow rate variations and the moment at which these variations occur, **characterized in that** said method comprises the following steps:
- obtaining a curve representing the flow rate as a function of time of the liquid aspirated or dispensed by the pipette,
- calculating the first derived function of said curve,
- identifying and recording the maximum and minimum values of said first derived function and the moment at which the maximum and minimum values occur,
- comparing the maximum and minimum values and the moments at which the maximum and minimum values occur with predetermined references for said values and for the moments at which they occur,
- depending on the result of the comparison, providing a validation or error message.

2. The method according to claim 1, **characterized in that** an error message indicating that the pipetting device has aspirated liquid then air is provided, if a minimum value below a first predetermined threshold is detected during an aspiration, before the end of said aspiration.

3. The method according to claim 1, **characterized in that** an error message indicating that the pipetting device has aspirated air only is provided, if the maximum value of the first derived function is below a second predetermined threshold.

4. The method according to claim 3, **characterized in that** the absence of a minimum value below a first predetermined threshold during the aspiration operation is also detected, the error message indicating that the device has aspirated air only is emitted if, during the aspiration operation, no minimum value below the first predetermined threshold, or maximum value above the second predetermined threshold, is detected.

5. The method according to claim 1, **characterized in that** an error message indicating that the pipetting device has aspirated air then liquid is provided, if the maximum value of the first derived function is above a second predetermined threshold and if said maximum value occurs after the time necessary, under the normal operating conditions of the pipetting device, to reach a stationary flow state of the liquid in the pipette, preferably after 30 ms, preferably after 40 ms after the beginning of the pipetting operation.

6. The method according to claim 2, wherein the minimum value of the first derived function according to the method of claim 2 is first considered, then, if said minimum value occurs before the quantity of liquid to be withdrawn is aspirated and if said minimum value is below the first predetermined threshold, the maximum value of the first derived function is considered, the presence of a maximum above the second predetermined threshold before the time needed, under the normal operating conditions of the pivoting device, to achieve a stationary flow state of the liquid in the pipette making it possible to verify that the pipetting device has aspirated liquid at the beginning of the operation, then air.

7. The method according to claim 5, wherein the maximum value of the first derived function according to claim 5 is first considered, then, if the maximum value is above the second predetermined threshold and if said maximum value occurs after the time necessary, under the normal operating conditions of the pipetting device, to achieve a stationary flow state of the liquid in the pipette, preferably after 30 ms, preferably after 40 ms after the beginning of the pipetting operation, then the maximum value of the first derived function is considered, the absence of a maximum above the second predetermined threshold for the time necessary, under the normal operating conditions of the pipetting device, to achieve a stationary flow state of the liquid in the pipette making it possible to verify that the pipetting device has aspirated air at the beginning of the operation, then liquid.

8. The method according to claim 1, **characterized in that** an error message indicating that the device has dispensed air after having dispensed the sample is emitted, if a maximum value is detected above a first predetermined threshold.

9. The method according to claim 1, **characterized in that** an error message indicating that the device has dispensed only air is emitted, if the maximum value detected during a dispensing operation is above a second predetermined threshold.

10. The method according to claim 9, **characterized in that** the absence of a maximum value above a first predetermined threshold during the dispensing operation is also detected, the error message indicating that the device has dispensed only air is emitted if, during a dispensing operation, no minimum value below the second predetermined threshold, or maximum value above the first predetermined threshold, is detected.

11. The method according to claim 1 or according to claim 7, **characterized in that** an error message indicating that the device has dispensed air before having dispensed the sample is emitted if a minimum value is detected below the second predetermined threshold after the time necessary, under the normal operating conditions of the pipetting device, to achieve a stationary flow state of the liquid in the pipette, preferably after 30 ms, preferably after 40 ms after the beginning of the pipetting operation.

12. The method according to claim 8, wherein the maximum value of the first derived function according to the method of claim 8 is first considered, then, if said maximum value occurs before the quantity of liquid to be withdrawn is aspirated and if said maximum value is above said first predetermined threshold, the minimum value of the first derived function is considered, the presence of a minimum value below the second predetermined threshold for the time necessary, under the normal operating conditions of the pipetting device, to achieve a stationary flow state of the liquid in the pipette making it possible to verify that the pipetting device has dispensed liquid at the beginning of the operation, then air.

13. The method according to claim 11, wherein the minimum value of the first derived function according to claim 11 is first considered, then, if the minimum value is below the second predetermined threshold and if said minimum value occurs after the time necessary, under the normal operating conditions of the pipetting device, to achieve a stationary flow state of the liquid in the pipette, preferably after 30 ms, preferably after 40 ms after the beginning of the pipetting operation, said minimum value of the first derived function is considered, the absence of a minimum value below the second predetermined threshold before the time necessary, under the normal operating conditions of the pipetting device, to achieve a stationary flow state of the liquid in the pipette making it possible to verify that the pipetting device has dispensed air at the beginning of the operation, then liquid.

14. The method according to claim 8 and claim 11, **characterized in that** an error message indicating that the device has dispensed air, then liquid, then air is provided if, after the time necessary, under the normal operating conditions of the pipetting device, to achieve a stationary flow state of the liquid in the pipette, both a minimum value below the second predetermined threshold, and a maximum value above the first predetermined threshold, are detected, said maximum value being detected in a moment after the time of detection of the minimum.

15. The method according to one of the preceding claims, **characterized in that** the maximum and minimum values of the first derived function of said curve are normalized by the flow rate and **in that** the excesses of the predetermined thresholds are related to the normalized values.

16. The method according to one of the preceding claims, **characterized in that** it combines a real-time error detection implemented during the step for obtaining the curve representative of the flow rate.

17. The method according to claim 16, **characterized in that** said real-time error detection involves a step for comparing the sign of the measured flow rate with a predefined value to confirm that an adequate pressure or vacuum is applied, for a dispensing or aspirating operation, respectively, and **in that** if the sign of the flow rate corresponds to the operation requested by a user, the operation is continued, and if not, the operation is stopped.

18. The method according to one of claims 16 and 17, **characterized in that** said real-time error detection involves a step for calculating the ratio of the measured flow rate to a pressure adjustment value, said ratio being compared with a predetermined threshold, the operation being continued if said ratio is above said predetermined threshold, and the operation being stopped if not.

19. The method according to one of claims 16 to 18, **characterized in that** said real-time error detection involves a step for comparing the time elapsed since the beginning of the operation with a predefined maximum duration, the operation being continued if the elapsed time is shorter than the predefined maximum duration, and the operation being stopped if not.

20. The method according to one of claims 16 to 19, **characterized in that** said real-time error detection includes a step for comparing, from the beginning of the aspiration, the value of the first derived function of the flow rate with a predefined value, the aspiration operation being stopped if the value of the first derived function is below the predefined value.

21. The method according to one of claims 16 to 19, **characterized in that** said real-time error detection includes a step for comparing, from the beginning of dispensing, the value of the first derived function of the flow rate with a predefined value, the dispensing operation being stopped if the value of the first derived function is above the predefined value.

22. The method according to one of the preceding claims, wherein said system capable of measuring a value representing the flow rate of the aspirated or dispensed liquid is provided with a flow rate sensor and wherein the aspiration and dispensing tip is provided with a removable end-piece arranged to penetrate the liquid to be aspirated, the ratio of the diameter of the end-piece to the diameter of the sensor being optimized so as to improve the resolution of the first derived function of the curve representing the flow rate as a function of time.

23. The method according to claim 1, **characterized in that** it comprises a step for calculating the volume of the aspirated or dispensed liquid, said volume calculation being obtained by:
- identifying, from maximum and minimum values of the first derived function, the beginning and end of an aspiration or dispensing operation,
- integrating the flow rate as a function of time between the values previously determined for the beginning and end of the aspiration or dispensing operation.
